# EUROPEAN PATENT APPLICATION

(11) **EP 3 751 050 A1**
(43) Date of publication of application: **16.12.2020**
(21) Application number: 19179961.8
(22) Date of filing: 13.06.2019
(51) Int. Cl.: D21C 5/00, D21B 1/32, D21C 5/02

(54) **USE OF PROBIOTIC BACTERIA FOR INHIBITING THE DECOMPOSITION OF PEROXIDE IN THE DEINKING OF RECYCLED FIBER PULP**

(71) Applicant: Wöllner GmbH, 67065 Ludwigshafen (DE)
(72) Inventor: KRÜGER, Mario, 67065 Ludwigshafen (DE); ALLES, Jörg, 67065 Ludwigshafen (DE)
(74) Representative: Müller-Boré & Partner Patentanwälte PartG mbB

(57) **Abstract**

The present invention relates to the use of compositions, comprising one or more species of probiotic bacteria, for inhibiting the enzymatic decomposition of hydrogen peroxide (H₂O₂) in processes of deinking recycled fiber pulp. Further, the present invention relates to respective processes of deinking recycled fiber pulp.

## Description

The present invention relates to the use of compositions, comprising one or more species of probiotic bacteria, for inhibiting the enzymatic decomposition of hydrogen peroxide (H₂O₂) in processes of deinking recycled fiber pulp. Further, the present invention relates to respective processes of deinking recycled fiber pulp.

Hydrogen peroxide is used in the deinking of recycled fiber pulp, e.g. recycled paper pulp, to increase the brightness of the pulp, as well as of the resulting final product. However, this activity can be reduced due to the decomposition of hydrogen peroxide mediated by enzymes, in particular catalases, derived from bacteria in the process solution. Such catalases are highly active enzymes, which can decompose up to 40000 peroxide molecules per second at a temperature of 0°C. In this context, a recent study has identified a number of bacterial species in respective process solutions, including e.g. species of the genera *Tepidimonas* and *Chryseobacterium* which, in addition to decomposing hydrogen peroxide due to catalase expression, cause further process-related difficulties such as the formation of biofilms and slimes, as well as the reduction of the quality of the final products.

Thus, bacterial growth in the process solutions of deinking processes needs to be controlled or inhibited, in order to maintain suitable peroxide activity and to ensure smooth processing and a sufficient product quality. Usually, it is attempted to control bacterial growth through the addition of biocides such as dialdehydes. However, such biocides often lack sufficient activity, e.g. to avoid formation of biofilms and slimes, and pose considerable health and environmental risks.

Therefore, the technical problem underlying the present invention is to provide efficient and safe means to decrease or avoid hydrogen peroxide decomposition in a deinking process of recycled fiber pulp caused by detrimental bacteria in the process solutions.

The solution to the above technical problem is achieved by the embodiments characterized in the claims.

In particular, in a first aspect, the present invention relates to the use of a composition, comprising one or more species of probiotic bacteria, for inhibiting the enzymatic decomposition of hydrogen peroxide in a process of deinking recycled fiber pulp.

The term "probiotic bacteria" has originally been used to refer to live microorganisms intended to provide health benefits when consumed, generally by improving or restoring the bacterial flora of the gut. However, as used herein, a broader definition can also be applied, said term relating to any live microorganisms that control or inhibit detrimental or unwanted microorganisms by competitively outgrowing the same in any biological or technical setting. Specifically, probiotic bacteria do not have a biocidal activity, but compete (e.g. over available nutrients and habitable space) with detrimental or unwanted microorganisms to finally outgrow and displace the same. In this manner, probiotic bacteria can abolish or reduce the production of detrimental enzymes such as catalases, as well as the formation of biofilms and slimes. Thus, a stable bacterial population that is compatible with a desired production process, e.g. the deinking of recycled fiber pulp, is established. Further, such probiotic bacterial populations are safe and do not compromise health or environment.

Respective probiotic bacteria are not particularly limited and are known in the art. In preferred embodiments, the one or more species of probiotic bacteria comprised in the compositions used according to the present invention is selected from the group consisting of species of the genus *Lactobacillus* (*Lactobacillus* spp.), *Lactococcus* spp., *Streptococcus* spp., *Propionibacterium* spp., *Enterococcus* spp., *Bifidobacterium* spp., *Bacillus* spp., *Sporolactobacillus* spp., *Micromonospora* spp., *Micrococcus* spp., *Rhodococcus* spp., *Escherichia* spp., and *Pseudomonas* spp..

More preferably, said one or more species of probiotic bacteria is selected from the group consisting of *Lactobacillus acidophilus, Lactobacillus plantarum, Lactobacillus salivarius, Lactobacillus delbrueckii, Lactobacillus rhamnosus, Lactobacillus bulgaricus, Lactobacillus crispatus, Lactobacillus gasseri, Lactobacillus jensenii; Lactococcus lactis* (subsp. *lactis*); *Streptococcus thermophilus; Propionibacterium freudenreichii* (subsp. *shermanii*); *Enterococcus faecium, Enterococcus thermophilus; Bifidobacterium longum, Bifidobacterium infantis, Bifidobacterium bifidum; Bacillus coagulans, Bacillus thermophilus, Bacillus laterosporus, Bacillus subtilis, Bacillus megaterium, Bacillus licheniformis, Bacillus pasteurii, Bacillus laevolacticus, Bacillus amyloliquifaciens, Bacillus mycoides, Bacillus pumilus, Bacillus lentus, Bacillus cereus Bacillus circulans; Escherichia coli; Pseudomonas fluorescens,* and *Pseudomonas aeruginosa.*

In specific embodiments, in cases where the compositions used according to the present invention comprise bacteria of the genus *Bacillus* and/or the genus *Sporolactobacillus,* said bacteria are present in the form of endospores.

In particularly preferred embodiments, the compositions used according to the present invention comprise bacteria of the species *Bacillus subtilis, Bacillus megaterium, Bacillus licheniformis,* and *Bacillus amyloliquifaciens.* In one embodiment, the compositions used according to the present invention contains one or more of said four bacterial species, with a total amount of 100% thereof, i.e. no further bacterial species are contained. In a specific embodiment of the present invention, the compositions comprise all four of said bacterial species, which may independently be present in an amount of 10 to 50%, such as 10 to 30% or 20 to 30%, with a total of 100% for all four species.

In specific embodiments, the compositions used according to the present invention comprise the probiotic bacteria in an amount of 10⁶ to 10⁹ cfu (colony forming units) per gram of the composition. In further specific embodiments, said probiotic bacteria are used after a period of growth.

In some embodiments, the compositions used according to the present invention further comprise a prebiotic sugar. In this context, the term "prebiotic" as used herein relates to compounds that induce the growth or activity of beneficial microorganisms, *i.e.,* the probiotic bacteria according to the present invention. Respective prebiotic sugars are not particularly limited and are known in the art. In preferred embodiments, the prebiotic sugar is selected from the group consisting of galacto-oligosaccharides having 3 to 9 monosaccharide units and fructo-oligosaccharides having 3 to 9 monosaccharide units, wherein inulin is particularly preferred. The prebiotic sugar can be present in the compositions used according to the present invention in an amount of 0.01 to 10% (w/w).

The presence of prebiotic sugars in the compositions used according to the present invention supports growth of the probiotic bacteria and/or accelerates the germination of bacterial endospores, thus providing an additional advantage to the same vis-á-vis detrimental bacteria, many of which cannot metabolize such sugars.

Preferably, the compositions used according to the present invention are formulated as liquid compositions.

Processes of deinking recycled fiber pulp for which the uses of the present invention are amendable are not particularly limited and are known in the art, provided such processes use hydrogen peroxide. Such deinking processes include wash deinking processes and flotation deinking processes, wherein flotation deinking processes are preferred. Respective deinking processes are known in the art.

The compositions used according to the present invention can be introduced into the process solution at any point in time prior to the addition of hydrogen peroxide. Preferably, said compositions are introduced into the process solution prior to a pulping process preceding said deinking process or immediately after said pulping process.

Recycled fiber pulps amendable to the present invention are not particularly limited and include recycled paper pulp.

In specific embodiments, the deinking process is performed in a deinking solution comprising
(a) sodium hydroxide (NaOH), preferably 0.2 to 1.5% (v/v) NaOH,
(b) hydrogen peroxide (H₂O₂), preferably 0.05 to 1% (v/v) H₂O₂,
(c) soluble glass, preferably 0.1 to 2% (v/v) soluble glass, and
(d) at least one of (i) one or more fatty acids and/or soaps, preferably 0.1 to 0.8% (v/v) of one or more fatty acids and/or soaps, (ii) one or more anionic and/or non-ionic surfactants, preferably 0.005 to 0.1% (v/v) of one or more anionic and/or non-ionic surfactants, and (iii) one or more silicon derivatives, preferably 0.05 to 0.2% (v/v) of one or more silicon derivatives.

Such deinking process solutions typically have a pH in the range of 8 to 11, such as in the range of 8.5 to 10.5. Moreover, the deinking process may be carried out at room temperature, or at elevated temperatures in the range of 35 to 65 °C, such as 45 to 55 °C.

As used herein, the term "soluble glass" (also: water glass) refers to a mixture of solidified, glassy, amorphous, water-soluble sodium, potassium and lithium silicates or their aqueous solutions. Depending on whether predominantly sodium, potassium or lithium silicates are contained, it is called sodium water glass, potassium water glass or lithium water glass. Further, suitable fatty acids, soaps, and anionic or non-ionic surfactants are not particularly limited and are known in the art.

For example, fatty acids usable in the deinking process solutions are selected from palmitic acid, linoleic acid, oleic acid, and stearic acid. Examples of soaps for use in deinking process solution include the sodium soaps of the above fatty acids. Surfactants usable in the deinking process solution include, for example, silicon derivatives, anionic surfactants, and non-ionic surfactants.

In some embodiments, the deinking process solution further comprises at least one chelating agent, such as diethylenetriaminepentaacetic acid (DTPA) to enhance metal complex formation.

Moreover, in a further embodiment, the deinking process solution may contain one or more calcium-containing compounds, such as calcium chloride or limewater, to increase hardness of the solution, preferably in an amount of 0.2 to 2% (v/v).

According to a further embodiment of the above-defined use, the deinking process solution may contain one or more alkaline (earth) metal hydroxides, such as Ca(OH)₂ and Mg(OH)₂, for a mild alkalization and pH control, depending on the system specific pH.

According to the present invention, the deinking process solution may further contain a defoaming agent to control foam formation. Suitable compounds are known in the art and are preferably used in an amount of 0.005 to 0.2% (v/v).

In a second aspect, the present invention relates to a process of deinking recycled fiber pulp, comprising the step of supplying a composition, comprising one or more species of probiotic bacteria, to the process solution prior to the addition of hydrogen peroxide (H₂O₂) to said process solution. In specific embodiments, said composition is supplied to the process solution after the addition of hydrogen peroxide.

In this aspect, the process of deinking recycled fiber pulp and/or the composition comprising one or more species of probiotic bacteria are preferably as defined above for the first aspect of the present invention.

Contrary to the general expectation in the technical field, the present invention is based on the surprising and unexpected fact that probiotic bacteria are not only viable in common deinking solutions, but can also exert their advantageous effects in terms of competitively outgrowing detrimental bacteria and, thus, prevent the generation of enzymes decomposing hydrogen peroxide, such as catalases, as well as the formation of biofilms and slimes. This is achieved in a safe, non-toxic and environmentally friendly manner.

The figures show:
Figure 1:
   Inhibition of catalase production after addition of probiotics to original water (dilution water DIP and clear filtrate).
Figure 2:
   Inhibition of catalase production after addition of probiotics to a sterile dilution water matrix (DIP).
Figure 3:
   Inhibition of catalase production after addition of typical microorganisms (no probiotics) to a sterile dilution water matrix (DIP).
Figure 4:
   Deposit formation test performed by microplate test method in a dilution water matrix with or without added probiotics, detail.
Figure 5:
   Deposit formation test performed by microplate test method in a clear filtrate water matrix (without former added probiotics) with or without added probiotics.
Figure 6:
   Deposit formation test performed by microplate test method in a clear filtrate water matrix (without former added probiotics) with or without added probiotics, detail.
Figure 7:
   Influence of H₂O₂ (low concentration) to typical microorganisms in the original dilution water (DIP).
Figure 8:
   Influence of H₂O₂ (low concentration) to probiotics former added to the original dilution water (DIP).
Figure 9:
   Influence of H₂O₂ (high concentration) typical microorganisms in the original dilution water (DIP).
Figure 10:
   Influence of H₂O₂ (high concentration) to probiotics in the original dilution water (DIP).
Figure 11:
   Influence of H₂O₂ (high concentration) to microorganisms in the original dilution water (DIP), after direct addition of probiotics.
Figure 12:
   Influence of H₂O₂ (high concentration) to probiotics in the original dilution water (DIP), after direct addition of probiotics.
Figure 13:
   BOD 5 of dilution water with former added probiotics compared to the BOD 5 of clear filtrate water without former added probiotics, influence of H₂O₂ on the BOD value.

The present invention will be further illustrated by the following example without being limited thereto.

### Examples

### Example 1:

### Probiotics and Catalase Activity

### Method:

Catalase activity was determined as titration of added H₂O₂ in a standard system. The titration started after addition of H₂O₂ and was followed up to 60min. Tests were performed under stirring and at 40°C.

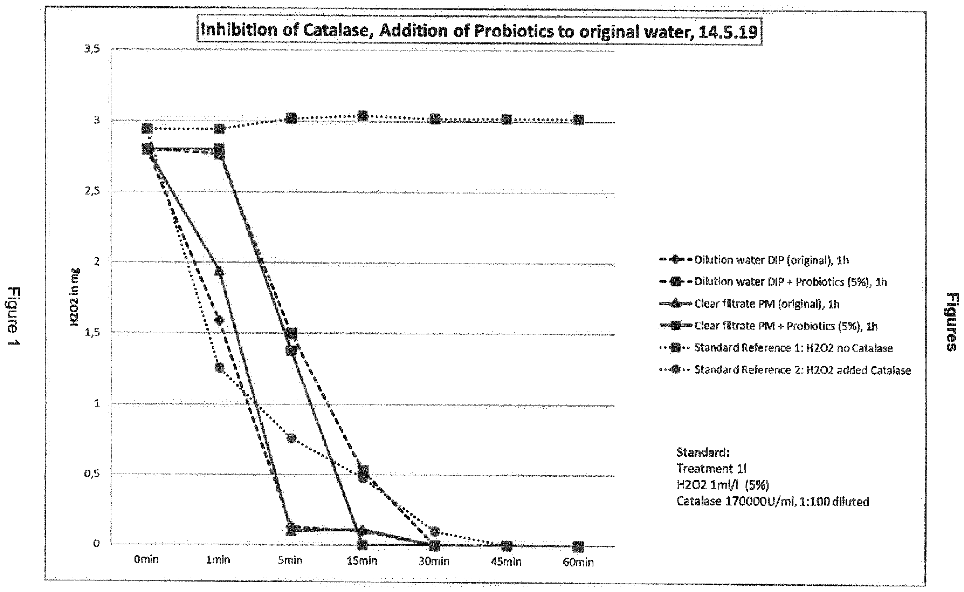

A strong decrease of H₂O₂ showed a strong activity of catalase. To the following results a reference line is added to show a typical development with or without catalase activity (standard reference 1 and 2, Figs. 1 to 3)

The following tests were performed with original waters of a paper mill.
a) Dilution water of the deinking System
b) Clear filtrate of the paper machine

To point out the influences of probiotics directly some trials were performed with sterile water samples (used as a test matrix) and added bacteria or probiotics.

### Test 1:

Dilution water of the deinking system (treatment with probiotics on site) was directly compared to a clear filtrate of the paper machine itself (without probiotics treatment). The trial was repeated with a direct addition of probiotics (cf. the graphs in Fig. 1).

As a result, both waters showed a typical content of catalase. This can be explained by the high contents of aerobic bacteria (10⁶ up to 10⁷ cfu/ml) after transportation. The time between transportation and start of the trials increased the growth time, leading to high cell numbers and a high content of catalase in the water.
An addition of probiotics directly to the water showed a significate delay in reduction of added H₂O₂, indicating that there is a delay in catalase production.

Therefore, the following trials were made with sterile water as a matrix and directly added bacteria or probiotics.

### Test 2:

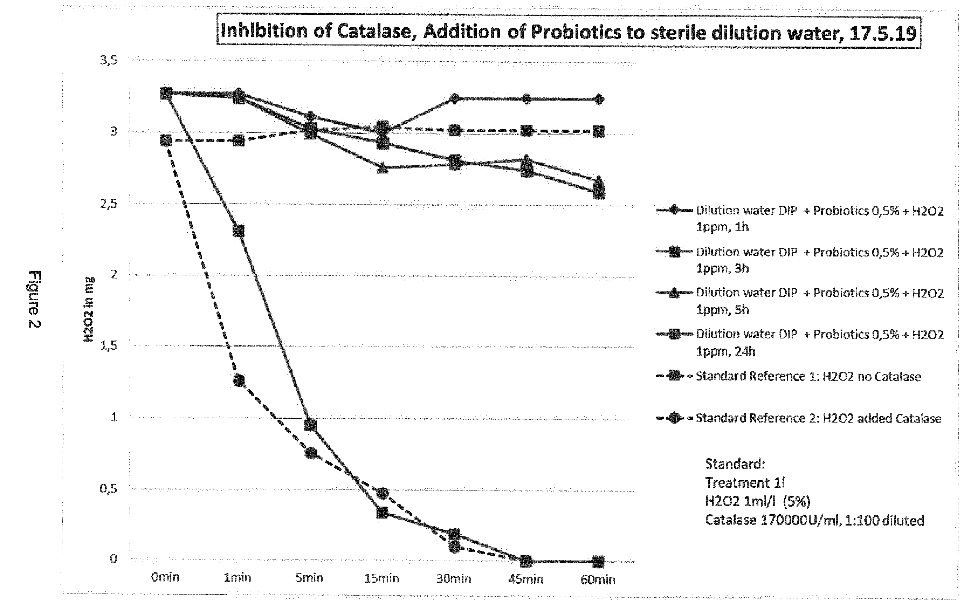

Dilution water of the deinking system (sterile), probiotics added (Fig. 2).

Added probiotics showed from the beginning a very weak catalase production (Fig. 2). This effect will last over 5h. After a growth period of 24h the catalase production will increase.

The tests were performed in a static system. That will have a strong influence on the development of catalase production and it will lead to an enrichment of the enzyme. The test was performed in addition with typical bacteria of an industrial water system.

### Test 3:

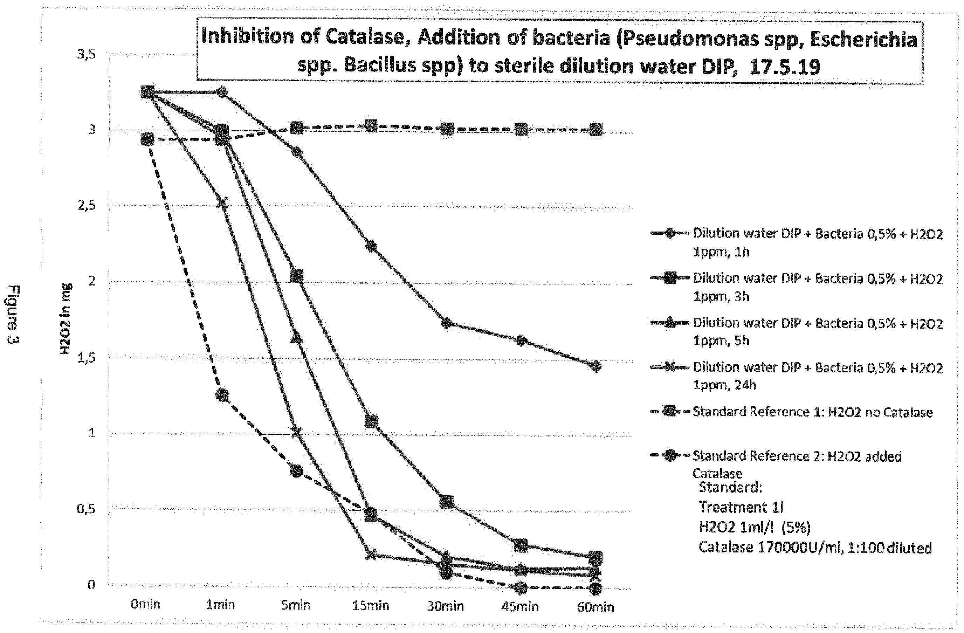

Dilution water of the deinking system (sterile), bacteria added (Fig. 3).

Added bacteria (mixture is typical for water-borne microorganisms in industry) showed from beginning on a very strong catalase production (Fig. 3). Maximum levels were obtained after 3h only.

### Summary:

The present tests showed that probiotics need more time to produce catalase.

The influence in the treated system is important: (i) there will be a reduced level in the system, (ii) a certain change in water will keep the probiotics to the early stage with a minor catalase production, and (iii) maximum production rate of catalase might not be reached. Therefore, the amount of catalase will be lower compared to untreated water.

In conclusion, probiotics help to stabilize H₂O₂ while producing a lower amount of catalase in the beginning of growth.

### Example 2:

### Deposit formation with or without addition of probiotics, in a dilution water deinking and a clear water of a paper machine

### Method:

Deposit formation was observed in a microplate test system. Well plates (12 wells) were filled with a process water / nutrients / water solution, and inoculated at room temperature under agitation for at least 48h. After pouring out the test solution, wells were moderately rinsed with tap water and afterwards stained with crystal violet.

The test formulation contained 20% of water to be tested (cf. Table 1), 10% Caso Bouillon (sterile) and 70% water (sterile). Probiotics or H₂O₂ were added as indicated, triple performance. Growth at room temperature (20-25°C), rotation 135rpm, Incubation time: 48h.

### Results:

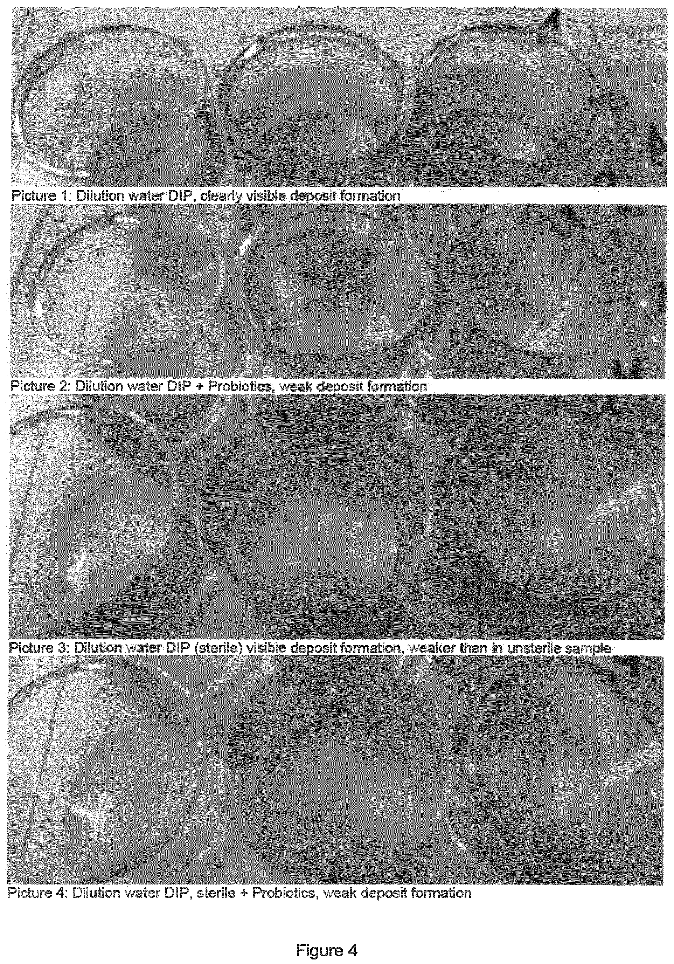

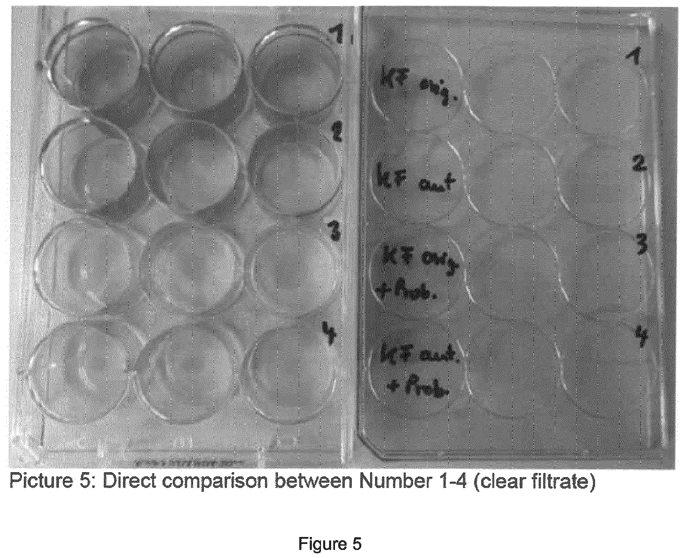

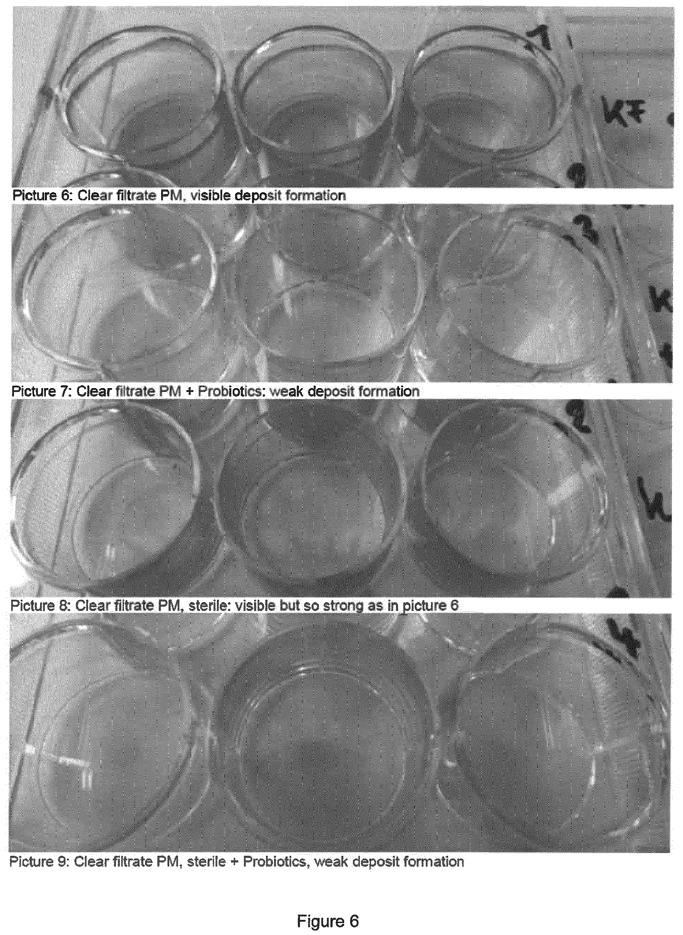

Results are shown in the below Tables 1 and 2, as well as in Figures 4 to 6.

**Table 1: Results dilution water DIP, previously treated with probiotics**

| **Water Type** | **Addition** | **Result** |
|---|---|---|
| Number 1: Dilution water DIP | | Deposit clearly visible |
| Number 2: Dilution water DIP, sterile | | Deposit visible, weaker |
| Number 3: Dilution water DIP | Probiotics (1%) | **No or weakly deposits** |
| Number 4: Dilution water DIP, sterile | Probiotics (1%) | **No or weakly deposits** |
| Number 5: Dilution water DIP | H₂O₂ (100ppm) | Deposit visible |
| Number 6: Dilution water DIP, sterile | H₂O₂ (100ppm) | Deposit weakly visible |
| Number 7: Dilution water DIP | H₂O₂ (100ppm) Probiotics (1%) | **No deposits** |
| Number 8: Dilution water DIP, sterile | H₂O₂ (100ppm) Probiotics (1%) | **No deposits** |

**Table 2: Results clear filtrate, no previous treatment with Probiotics**

| **Water Type** | **Addition** | **Result** |
|---|---|---|
| Number 1: Clear filtrate PM | | Deposit clearly visible |
| Number 2: Clear filtrate PM, sterile | | Deposit visible, weaker |
| Number 3: Clear filtrate PM | Probiotics (1%) | **No or weakly deposits** |
| Number 4: Clear filtrate PM, sterile | Probiotics (1%) | **No or weakly deposits** |
| Number 5: Clear filtrate PM | H₂O₂ (100ppm) | Deposit visible |
| Number 6: Clear filtrate PM, sterile | H₂O₂ (100ppm) | Deposit weakly visible |
| Number 7: Clear filtrate PM | H₂O₂ (100ppm) Probiotics (1%) | **No deposits** |
| Number 8 Clear filtrate PM, sterile | H₂O₂ (100ppm) Probiotics (1%) | **No deposits** |

As a result, deposits in the DIP (deinking) system were mainly formed by bacteria (biofilm or slime). The same result was obtained with clear filtrate, indicating that also in the PM (paper machine) the main reason for slime is the microbial load of the system. There is an indication that the deposits may be strengthened by the chemical components (weaker but visible formation of deposits in sterile process waters).

After addition of probiotics, the deposit formation decreased significantly in both cases, indicating that probiotics avoid or minimize the formation of biofilms. This result is new in the aspect of the DIP system. These waters are treated with more antimicrobial substances than process waters in a paper making process. Especially H₂O₂ may have a strong antimicrobial effect on the microorganisms, but also tensides, NaOH or other chemicals used in the deinking process are well known to influence the growth of microorganisms in a negative way.

In a second step, H₂O₂ was additionally combined with the test waters. Former trials showed that probiotics can resist this antimicrobial substance in the concentration added. The results are comparable to the above.

In conclusion, probiotics help to avoid deposits also in a DIP system with antimicrobial added substances. This can be observed in original water and in water with added H₂O₂. In industrial and cooling waters, a strong reduction of biofilms is observed while adding probiotics. New is the fact that this can be observed in a more antimicrobial water like a dilution water of a dip system.

### Example 3:

### Resistance against H₂O₂

The influence of H₂O₂ on the growth of probiotics was determined using several methods.

### Method 1: Minimal inhibitory concentration; biocide: H₂O₂

**Method:** Transfer the biocide solution (double concentration) into nutrient broth (double concentration), 5ml each, ratio 1:1. Inoculate this growth media with 100µl of inoculum. After incubation under defined conditions a visual growth control should be carried out.
**pH- value:** according to the given nutrient broth system
**Nutrient broth:** CASO broth for bacteria, Sabouraud broth for yeasts and moulds
**Incubation:** bacteria up to three days, temperature 30 to 37°C, yeasts and moulds up to 5 days, temperature 25°C.
**Results:** visual control of growth (turbidity), growth control on nutrient agar is necessary
**Microorganisms used in the test:** as indicated in Table 3, below.

Results are shown in Table 3, below.

**Table 3: Results minimal inhibitory concentration**

| **Microorganisms** | **Counts in cfu/ml of liquid culture/ (counts of inoculum in the test) in cfu/ml** | **Minimum inhibitory concentration** |
|---|---|---|
| *Escherichia coli* | 1,3 x 10⁹ (1,3 x 10⁷) | 500ppm |
| *Pseudomonas fluorescens* | 8,6 x 108 (8,6 x 10⁶) | 125ppm |
| *Bacillus subtilis* | 5,3 x 10⁶ (5,4 x 10⁴) | 5000ppm |
| *Saccharomyces cerevisiae* | 6,0 x 10⁶ (6,0 x 10⁵) | 250ppm |
| *Aspergillus niger* | 5,0 x 10⁷ (5,0 x 10⁶) | No inhibition |
| *Probiotics (after growing)* | 4,8 x 10⁸ (2,0 x 10⁸) | 5000ppm |
| *Probiotics (original, directly)* | 5,5 x 10⁸ (5,5 x 10⁶) | 500ppm |
| *Clear filtrate (original)* | 8,0 x 10⁷ (4,0 x 10³) | 500ppm |
| *Dilution water (original)* | 1,2 x 10⁴ (4,0 x 10³) | 1000ppm |

As a result, H₂O₂ is a very effective biocidal substance for bacteria and yeasts. Spore forming bacteria (like *Bacillus* species) can resist higher concentrations of the biocide (5000ppm versus 125-500ppm). Further, probiotics can resist H₂O₂ in higher concentrations when used after a growth period. Probiotics need some time to grow, so antimicrobial substances added in this growing process may be more effective. This can be avoid by repeated dosage of probiotics. Further, probiotics are more resistant to antimicrobial influences caused by oxidative stress. This result was clearly visible in the dilution water of the deinking process compared to a water of a paper machine.

In conclusion, probiotics can withstand the antimicrobial influence of H₂O₂ in higher concentrations than other bacteria tested.

### Method 2: Kill tests with H₂O₂

**Method:** Water samples were used directly for the test. As indicated, the samples were treated with biocide. Measurement (like total aerobic count, probiotics) took place as indicated (performed at different times). The treated samples were inoculated at a temperature of 35°C.

For the detection of microorganisms, well-established methods were used.

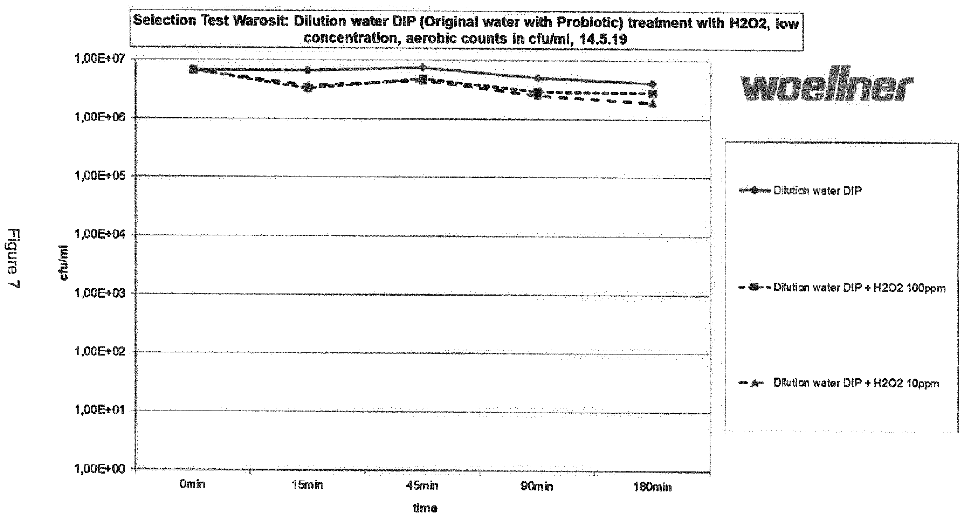

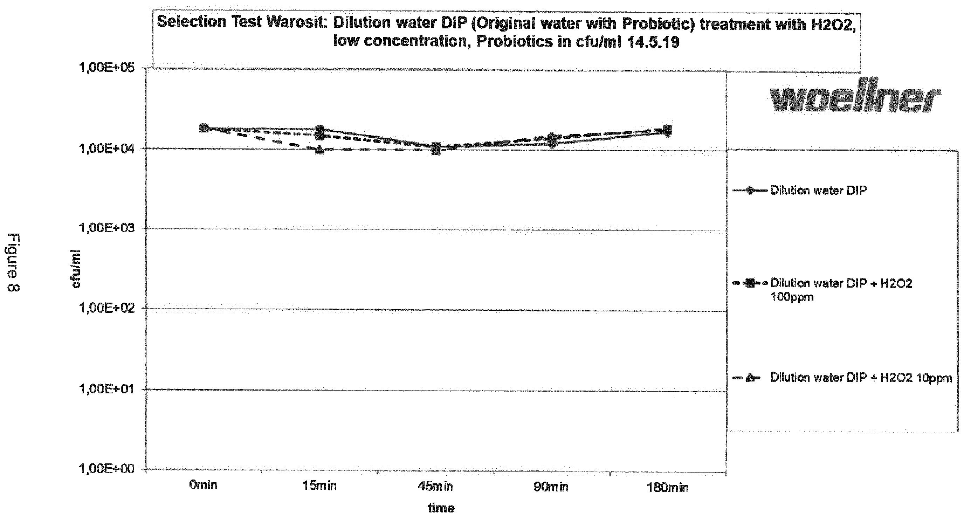

Results for tests with dilution water (original deinking water) and low concentrations of peroxide are shown in Figures 7 and 8. Results in low concentrations of peroxide show that there is a minimal influence on the microbial load of the dilution water treated with probiotics. No influence could be observed on the probiotic themselves (Fig. 8).

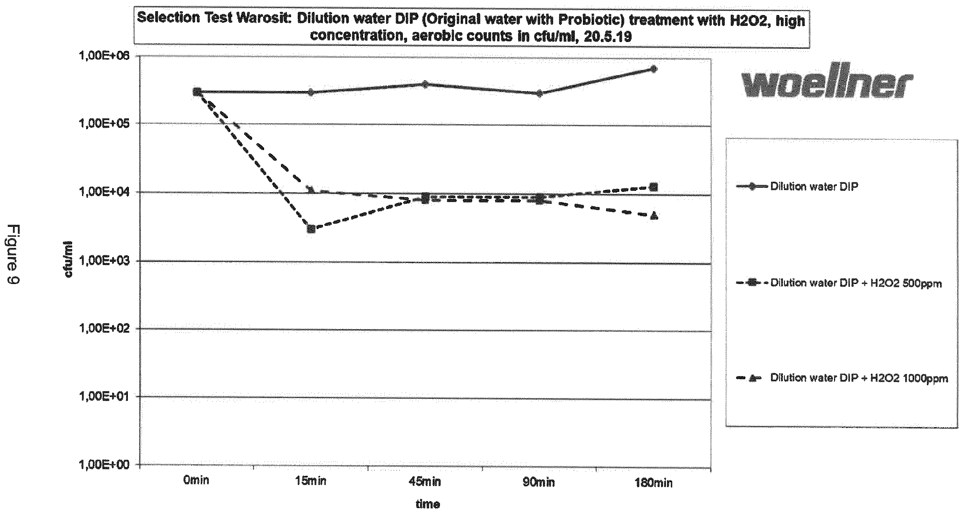

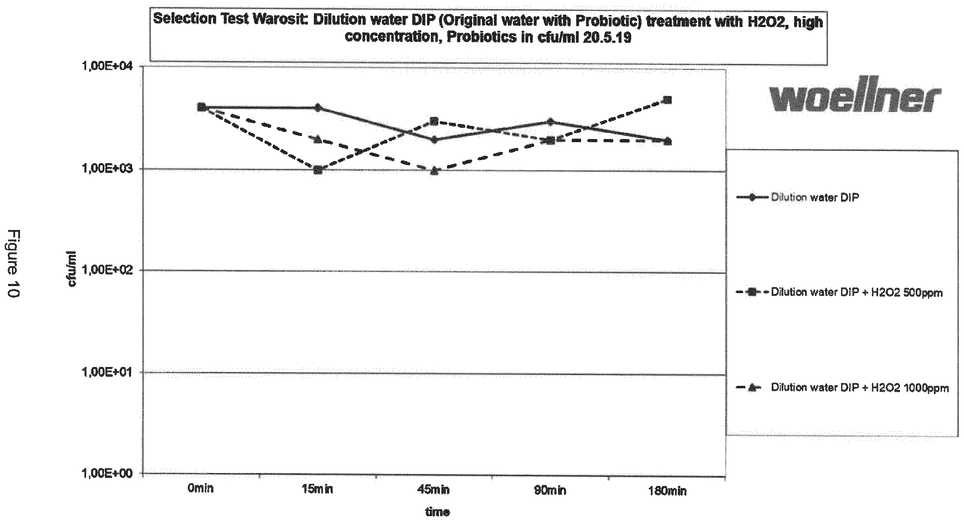

Results for tests with dilution water (original deinking water) and high concentrations of peroxide are shown in Figures 9 and 10. Results in high concentrations of peroxide show that there is a minimal influence on the microbial load of the dilution water treated previously with probiotics. No influence could be observed on the probiotics themselves (Fig. 10).

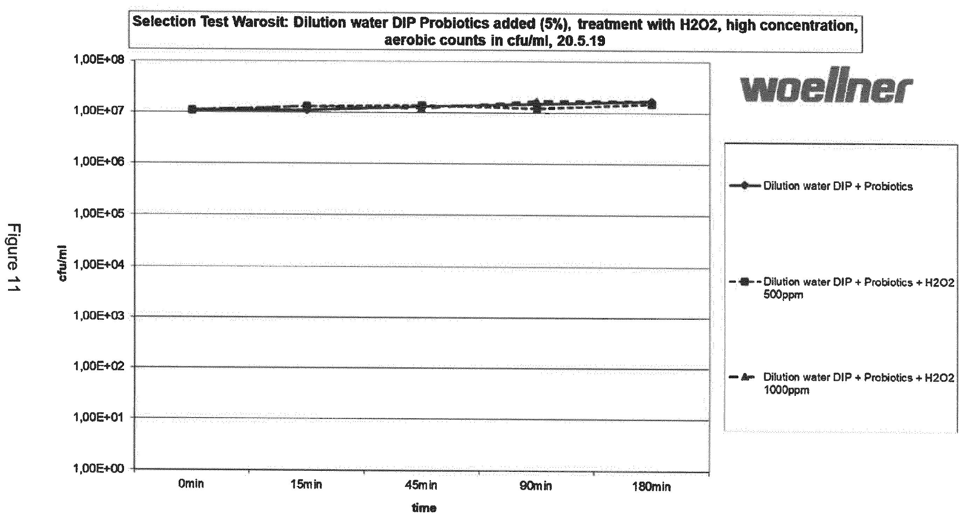

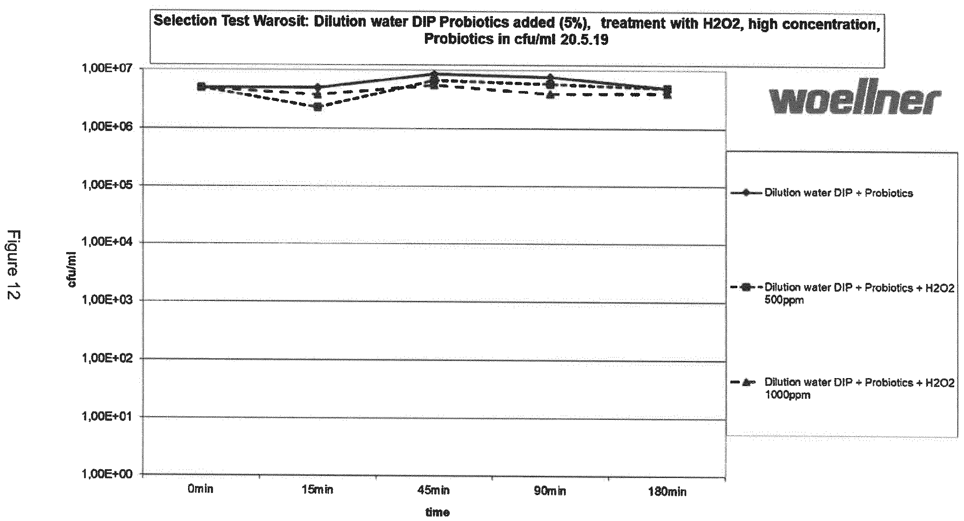

Results for tests with dilution water (deinking) inoculated directly with probiotics and treated with high concentrations of peroxide are shown in Figures 11 and 12. In high concentrations of peroxide and after a direct inoculation with probiotics there is no influence on the aerobic nor "probiotic" counts indicating that these microorganisms can resist the biocide in high concentrations. The counts of aerobic bacteria compared to probiotics in this test indicate that probiotics are the main part of the biomass.

### Method 3: Biochemical oxygen demand (BOD) test with dilution water (deinking water) treated with low concentrations of peroxide

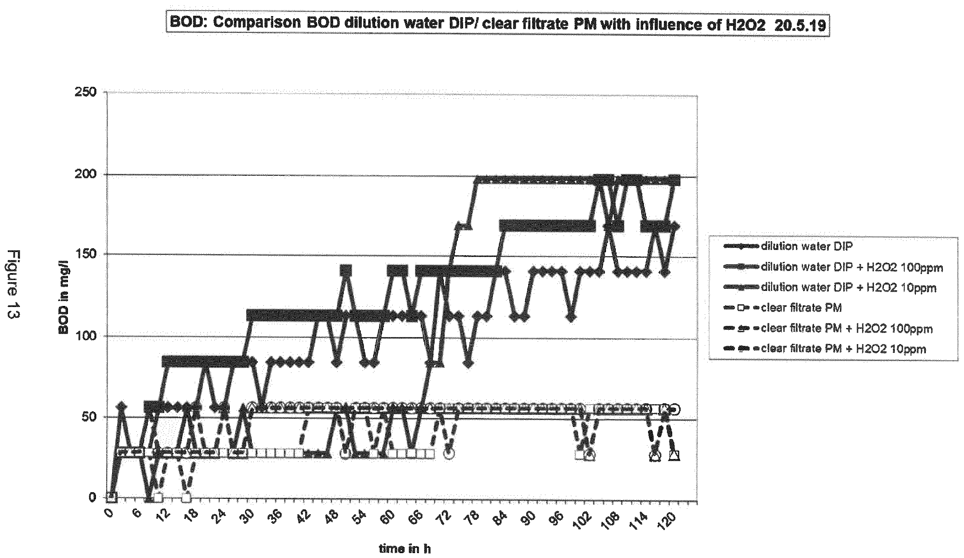

**Method:** test was carried out with an Oxitop Test system according the standard procedure recommended by the manufacturer Xylem.
Results are shown in Figure 13. The respiratory activity in the dilution water (original water treated previously with probiotics) was much more visible compared to an untreated clear filtrate of the machine, even under the influence of added peroxide.

In conclusion, probiotics can resist higher concentrations of H₂O₂ than other bacteria. This fact is observed in all tests (minimal inhibitory concentration, kill test, BOD) performed. In the deinking system, high concentrations of H₂O₂ can be reached. That indicates that probiotics can use such an influence to establish their growth and to establish themselves in the system.

## Claims

1. The use of a composition, comprising one or more species of probiotic bacteria, for inhibiting the enzymatic decomposition of hydrogen peroxide (H₂O₂) in a process of deinking recycled fiber pulp.

2. The use according to claim 1, wherein the one or more species of probiotic bacteria is selected from the group consisting of species of the genus *Lactobacillus* (*Lactobacillus* spp.), *Lactococcus* spp., *Streptococcus* spp., *Propionibacterium* spp., *Enterococcus* spp., *Bifidobacterium* spp., *Bacillus* spp., *Sporolactobacillus* spp., *Micromonospora* spp., *Micrococcus* spp., *Rhodococcus* spp., *Escherichia* spp., and *Pseudomonas* spp..

3. The use according to claim 1 or claim 2, wherein the one or more species of probiotic bacteria is selected from the group consisting of *Lactobacillus acidophilus, Lactobacillus plantarum, Lactobacillus salivarius, Lactobacillus delbrueckii, Lactobacillus rhamnosus, Lactobacillus bulgaricus, Lactobacillus crispatus, Lactobacillus gasseri, Lactobacillus jensenii; Lactococcus lactis* (subsp. *lactis*); *Streptococcus thermophilus; Propionibacterium freudenreichii* (subsp. *shermanii*); *Enterococcus faecium, Enterococcus thermophilus; Bifidobacterium longum, Bifidobacterium infantis, Bifidobacterium bifidum; Bacillus coagulans, Bacillus thermophilus, Bacillus laterosporus, Bacillus subtilis, Bacillus megaterium, Bacillus licheniformis, Bacillus pasteurii, Bacillus laevolacticus*, *Bacillus amyloliquifaciens, Bacillus mycoides, Bacillus pumilus, Bacillus lentus, Bacillus cereus Bacillus circulans; Escherichia coli; Pseudomonas fluorescens,* and *Pseudomonas aeruginosa.*

4. The use according to any one of claims 1 to 3, wherein bacteria of the genus *Bacillus* and/or the genus *Sporolactobacillus* are present in the form of endospores.

5. The use according to any one of claims 1 to 4, wherein said composition comprises bacteria of the species *Bacillus subtilis, Bacillus megaterium, Bacillus licheniformis,* and *Bacillus amyloliquifaciens.*

6. The use according to claim 4, wherein each species is present in an amount of 20 to 30%, with a total of 100% for said species.

7. The use according to any one of claims 1 to 6, wherein said composition comprises the probiotic bacteria in an amount of 10⁶ to 10⁹ cfu per gram of the composition.

8. The use according to any one of claims 1 to 7, wherein said composition further comprises a prebiotic sugar, preferably selected from the group consisting of galacto-oligosaccharides having 3 to 9 monosaccharide units and fructo-oligosaccharides having 3 to 9 monosaccharide units.

9. The use according to claim 8, wherein the prebiotic sugar is present in said composition in an amount of 0.01 to 10% (w/w).

10. The use according to any one of claims 1 to 9, wherein said process of deinking recycled fiber pulp is a flotation deinking process.

11. The use according to any one of claims 1 to 10, wherein the recycled fiber pulp is recycled paper pulp.

12. The use according to any one of claims 1 to 11, wherein said deinking process is performed in a deinking solution comprising
(a) sodium hydroxide (NaOH),
(b) hydrogen peroxide (H₂O₂),
(c) soluble glass, and
(d) at least one of (i) one or more fatty acids and/or soaps, (ii) one or more anionic and/or non-ionic surfactants, and (iii) one or more silicon derivatives.

13. The use according to claim 12, wherein said deinking solution comprises
(a) 0.2 to 1.5% (v/v) NaOH,
(b) 0.05 to 1% (v/v) H₂O₂,
(c) 0.1 to 2% (v/v) soluble glass, and
(d) at least one of (i) 0.1 to 0.8% (v/v) of one or more fatty acids and/or soaps, (ii) 0.005 to 0.1% (v/v) of one or more anionic and/or non-ionic surfactants, and (iii) 0.05 to 0.2% (v/v) of one or more silicon derivatives.

14. A process of deinking recycled fiber pulp, comprising the step of supplying a composition, comprising one or more species of probiotic bacteria, to the process solution prior to the addition of hydrogen peroxide (H₂O₂) to said process solution.

15. The process according to claim 14, wherein said composition is as defined in any one of claims 2 to 9 and/or wherein said process is as defined in any one of claims 10 to 13.
